# EUROPÄISCHE PATENTANMELDUNG

(11) **EP 1 521 025 A2**
(43) Veröffentlichungstag der Anmeldung: **06.04.2005**
(21) Anmeldenummer: 04022607.8
(22) Anmeldetag: 22.09.2004
(51) Int. Cl.: F16L 3/237, B60K 15/01

(54) **Halter für eine Kraftstoffleitung**

(30) Priorität: 04.10.2003 DE 10346088
(71) Anmelder: Gummiwarenfabrik R. Neddermann GmbH, 73776 Altbach (DE)
(72) Erfinder: Habel, Gernot, 74177 Bad Friedrichshall (DE); Kniess, Matthias, 70329 Stuttgart (DE)
(74) Vertreter: Dreiss, Fuhlendorf, Steimle & Becker

(57) **Zusammenfassung**

Es wird ein Halter für eine oder mehrere Kraftstoffleitungen (15) und (17) vorgeschlagen, der vormontierbar ist und der die Montage und Fixierung der Kraftstoffleitungen (15) in einem Fahrzeug wesentlich erleichtert.

## Beschreibung

Die Erfindung betrifft einen Halter für mindestens eine Kraftstoffleitung mit einem Oberteil und mit einem Unterteil, wobei das Oberteil und das Unterteil gelenkig miteinander verbunden sind, und mit einem aufklappbaren Aufnahmeteil für eine oder mehrere Kraftstoffleitungen, wobei das Aufnahmeteil in geschlossenem Zustand des Halters vom Oberteil und vom Unterteil fixiert wird.

Ein solcher Halter wird derzeit in Serie produziert und in Kraftfahrzeugen montiert. Nachteilig an diesem Halter ist, dass er aus drei Teilen besteht, die bei der Montage des Halters im Kraftfahrzeug relativ zueinander und relativ zum Kraftfahrzeug genau positioniert sein müssen. Dies bedeutet, dass ein Arbeiter eine überdurchschnittliche Geschicklichkeit haben muss, wenn er diesen Halter am Fließband montieren will. Anders ausgedrückt: der Zeitaufwand für die Montage und die Gefahr, dass bei der Montage eines der drei Teile des Halters herunterfällt und so Zeitverzögerungen bei der Montage entstehen, sind relativ hoch.
Aus der EP 1 238 844 A2 ist ein Halter für eine Kraftstoffleitung bekannt bei der ein elastisches Dämpfungselement zwischen dem Unterboden und einer Unterbodenverkleidung eingeklemmt wird. Das Dämpfungselement wiederum nimmt eine oder mehrere Kraftstoffleitungen auf. Dieser Halter für eine Kraftstoffleitung ist sehr aufwändig aufgebaut und nicht universal einsetzbar.

Aus der DE 199 39 081 C1 ist ein einstückiger Halter für eine Kraftstoffleitung bei dem Oberteil und Unterteil durch ein Filmscharnier miteinander verbunden sind. Wegen der Einstückigkeit stellt dieser Halter hinsichtlich Festigkeit und Dämpfungseigenschaften einen Kompromiss dar.

Aus der DE 30 28 998 A1 ist ein Halter für eine Kraftstoffleitung bekannt bei dem eine Schelle aus Metall am Fahrzeug festgeschweißt wird. In diese Schelle wird ein Aufnahmeteil aus Gummi eingelegt und anschließend wird die Schelle durch Umbiegen geschlossen. Dieser ist aufwändig und fehleranfällig in der Montage

Der Erfindung liegt die Aufgabe zugrunde, einen Halter bereitzustellen, der einfacher, schneller und mit einer kleineren Fehlerquote montiert werden kann.

Diese Aufgabe wird erfindungsgemäß bei einem Halter für mindestens eine Kraftstoffleitung mit einem Oberteil und einem Unterteil gelöst, wobei das Oberteil und das Unterteil gelenkig miteinander verbunden sind, und mit einem aufklappbaren Aufnahmeteil für eine oder mehrere Kraftstoffleitungen, wobei das Aufnahmeteil in geschlossenem Zustand des Halters vom Oberteil und vom Unterteil fixiert wird, dadurch gelöst, dass das Aufnahmeteil formschlüssig mit dem Oberteil verbindbar ist.

Durch diese Maßnahme wird erreicht, dass sich das Oberteil und das Aufnahmeteil während des Montagevorgangs nicht mehr voneinander entfernen können. Da das Oberteil und das Unterteil miteinander gelenkig verbunden sind, ist somit gewährleistet, dass keines der drei Bauteile bei der Montage herunterfallen kann. Somit sinkt die Fehlerquote bei der Montage drastisch und die Montage kann in einer kürzeren Zeit erfolgen.

Bei einer Variante des erfindungsgemäßen Halters ist vorgesehen, dass das Oberteil eine erste Aussparung aufweist, dass das Aufnahmeteil ein T-förmiges Befestigungselement aufweist, und dass Oberteil und Aufnahmeteil mittels Aussparung und Befestigungselement verbindbar sind. Durch diese sehr einfache und leicht zu montierende formschlüssige Verbindung zwischen Oberteil und Aufnahmeteil kann vor der Montage des eigentlichen Halters im Fahrzeug die gewünschte Verbindung zwischen Aufnahmeteil und Oberteil hergestellt werden.

In weiterer Ergänzung der Erfindung weist das Unterteil eine zweite Aussparung auf und weist das Aufnahmeteil eine hakenförmige Nase auf, die in die zweite Aussparung eingreift, so dass auch das Unterteil und das Aufnahmeteil formschlüssig miteinander verbunden sind. Besonders vorteilhaft an dieser Ausgestaltung ist, dass beim Öffnen des Halters, das heißt wenn Oberteil und Unterteil auseinander geklappt werden, gleichzeitig und zwangsläufig auch das aufklappbare Aufnahmeteil geöffnet wird, so dass der geöffnete Halter auf einfachste Weise über die zu haltenden Kraftstoffleitungen geschoben und anschließend wieder geschlossen werden kann.

Wenn der erfindungsgemäße Halter geschlossen ist, umgibt das Aufnahmeteil die mindestens eine Kraftstoffleitung allseitig, so dass eine sichere Fixierung der Kraftstoffleitung gewährleistet ist.

Um eine noch weitergehende Fixierung des Aufnahmeteils in dem Unterteil zu erreichen, weist das Unterteil in weiterer Ausgestaltung der Erfindung eine dritte Aussparung auf, und weist das Aufnahmeteil einen mit der dritten Aussparung zusammenwirkenden Steg auf. Durch diese Maßnahme kann gewährleistet werden, dass das Aufnahmeteil in geschlossenem Zustand des Halters mittels dreier Aussparungen am Oberteil und am Unterteil befestigt ist, so dass eine sehr sichere Fixierung des Aufnahmeteils relativ zum Oberteil und zum Unterteil gewährleistet ist. Ein Verkanten des Aufnahmeteils im Oberteil oder im Unterteil ist dadurch ausgeschlossen.

Besonders vorteilhaft an dem erfindungsgemäßen Halter ist, dass wenn, wie zuvor beschrieben, das Aufnahmeteil durch die hakenförmige Nase aufgeklappt wird, sobald der Halter geöffnet wird, sich beim darauf folgenden Schließen der Steg automatisch in die dritte Aussparung des im Unterteil des Halters schiebt, so dass für diese Fixierung des Aufnahmeteils keine manuellen zusätzlichen Tätigkeiten erforderlich sind. Somit kann der erfindungsgemäße Halter sehr einfach und sehr schnell vormontiert werden, was die Wirtschaftlichkeit des erfindungsgemäßen Halters weiter erhöht.

Die gelenkige Verbindung zwischen Oberteil und Unterteil wird Vorteilhafterweise durch eine Biegeverlappung hergestellt, wobei zu diesem Zweck das Oberteil eine vierte Aussparung aufweist und das Unterteil einen mit der vierten Aussparung zusammenwirkenden Lappen aufweist. Diese Biegeverlappung führt zu einer gelenkigen Verbindung zwischen Oberteil und Unterteil, die einfach in der Herstellung und Montage ist und außerdem sehr belastbar ist. Außerdem werden Oberteil und Unterteil mit ausreichender Präzision zueinander fixiert.

Um das Oberteil und das Unterteil auf einfache Weise am Kraftfahrzeug zu befestigen, weisen sowohl das Oberteil als auch das Unterteil einen Flansch mit je einer Öffnung auf, die in geschlossenem Zustand des Halters miteinander fluchten, so dass durch eine Schraube der erfindungsgemäße Halter an dem Fahrzeug befestigt werden kann.

Weitere Vorteile und vorteilhafte Ausgestaltungen der Erfindung sind der nachfolgenden Zeichnung, deren Beschreibung und den Patentansprüchen entnehmbar.

Es zeigen:
- Figur 1: einen erfindungsgemäßen Halter in geschlossenem Zustand in einer Seitenansicht;
- Figur 2: eine Ansicht von oben auf einen erfindungsgemäßen Halter in geschlossenem Zustand;
- Figur 3: eine Seitenansicht des erfindungsgemäßen geschlossenen Halters;
- Figur 4: ein Oberteil des erfindungsgemäßen Halter in verschiedenen Ansichten;
- Figur 5: ein Unterteil des erfindungsgemäßen Halters in verschiedenen Ansichten; und
- Figur 6: ein Aufnahmeteil des erfindungsgemäßen Halters ebenfalls in verschiedenen Ansichten.

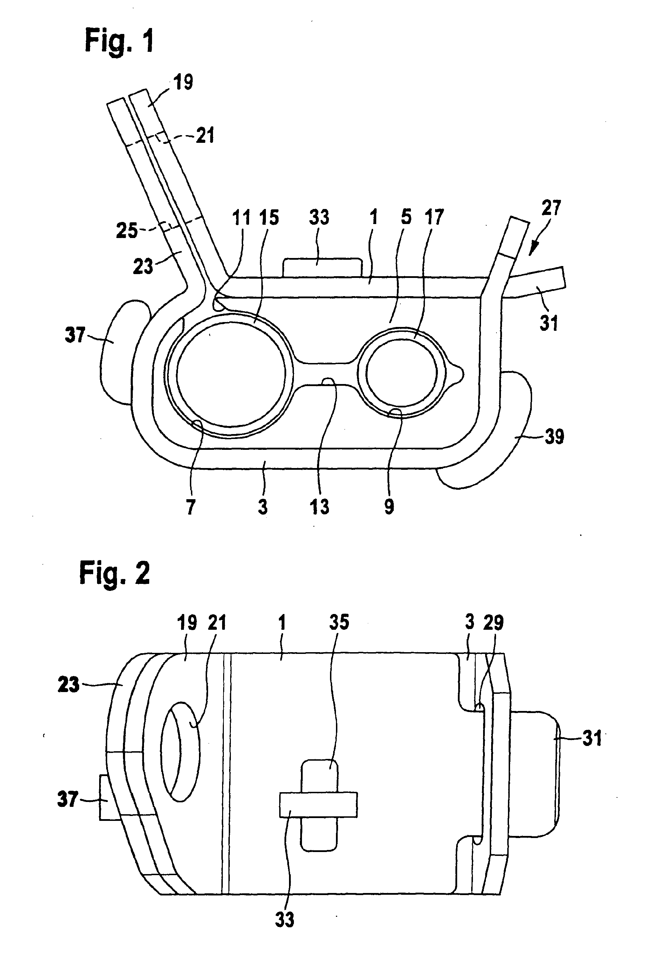

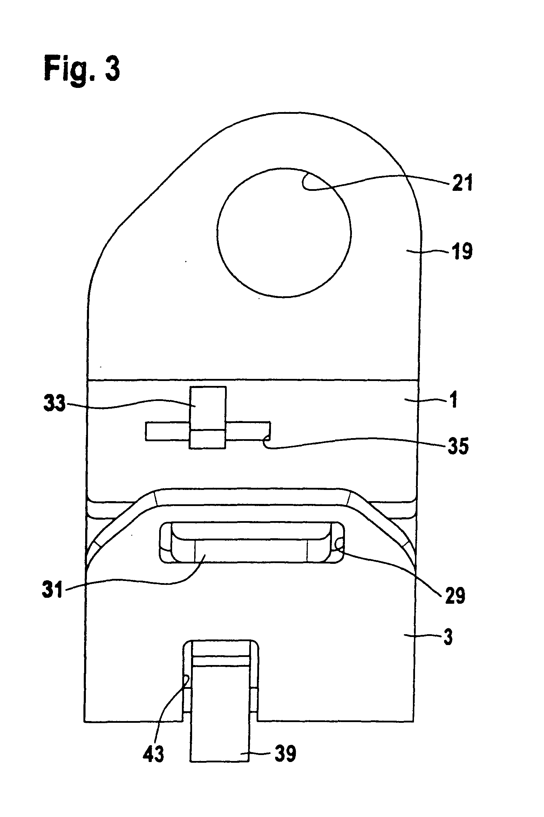

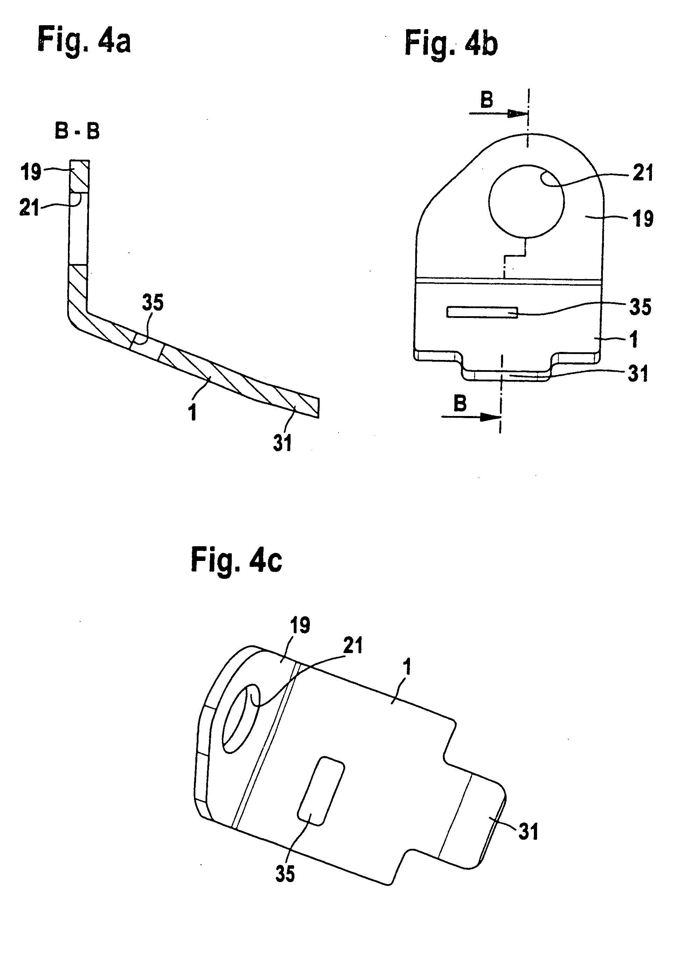

Die Figuren 1 - 6 zeigen alle das gleiche Ausführungsbeispiel, wobei die Figuren 1 - 3 verschiedene Ansichten eines erfindungsgemäßen Halters in geschlossenem Zustand zeigen. Die Figuren 4 - 6 zeigen die Einzelteile des erfindungsgemäßen Halters - Oberteil, Unterteil und Aufnahmeteil - in verschiedenen Ansichten. Die mit dem Buchstaben a) bezeichnete Ansicht der Figuren 4 - 6 ist eine Seitenansicht oder ein Längsschnitt, die mit b) bezeichnete Ansicht der Figuren 4 - 6 ist eine Seitenansicht und die mit c) bezeichnete Ansicht der Figuren 4 - 6 ist eine Ansicht von oben.

Im Folgenden wird der erfindungsgemäße Halter anhand der Figuren 1 - 3 beschrieben. Die konstruktive Ausgestaltung der Einzelteile kann zusätzlich den Figuren 4 - 6 entnommen werden. In den Figuren 1 - 6 werden durchgängig die gleichen Bezugszeichen verwandt.

Figur 1 zeigt einen erfindungsgemäßen Halter in einer Seitenansicht. Der erfindungsgemäße Halter besteht aus einem Oberteil 1, einem Unterteil 3 und einem Aufnahmeteil 5. Das Aufnahmeteil 5, welches aus einem elastischen Material, wie beispielsweise Gummi, hergestellt ist, weist eine erste Bohrung 7 und eine zweite Bohrung 9 auf. In der ersten Bohrung 7 wird eine erste Kraftstoffleitung 15 und in der zweiten Bohrung 9 wird eine zweite Kraftstoffleitung 17 gehalten.

Da die erste Bohrung 7 eine Öffnung 11 aufweist und zwischen der ersten Bohrung 7 und der zweiten Bohrung 9 ein Durchbruch 13 vorhanden ist, kann das Aufnahmeteil 5 aufgeklappt werden. In aufgeklapptem Zustand (nicht dargestellt) des Aufnahmeteils 5 kann das Aufnahmeteil 5 über die erste Kraftstoffleitung 15 und die zweite Kraftstoffleitung 17 geschoben werden. Wenn nun das Aufnahmeteil 5 wieder zusammengeklappt wird und somit den in Figur 1 dargestellten Zustand einnimmt, dann werden die erste Kraftstoffleitung 15 und die zweite Kraftstoffleitung 17 nahezu allseitig von den Bohrungen 7 und 9 des Aufnahmeteils 5 umschlossen.

Da das erste Aufnahmeteil 5 aus einem elastischen Material, wie beispielsweise Gummi, hergestellt wird, sind die erste Kraftstoffleitung 15 und die zweite Kraftstoffleitung sicher fixiert und gegen unzulässige Beanspruchungen geschützt.

Das Aufnahmeteil 5 wiederum wird von dem Oberteil 1 und dem Unterteil 3 umschlossen und ist mit diesen Teilen formschlüssig verbunden. Dadurch können, wenn der erfindungsgemäße Halter an einem nicht dargestellten Kraftfahrzeug befestigt wird, die erste Kraftstoffleitung 15 und die zweite Kraftstoffleitung 17 sicher fixiert werden. Wegen des Formschlusses zwischen Aufnahmeteil 5, Oberteil 1 und Unterteil 3 kann das Aufnahmeteil 5 nicht durch die Vibrationen des Fahrzeugmotors aus dem Oberteil 1 u8nd dem Unterteil 3 herauswandern. Deshalb ist der erfindungsgemäße Halter für eine Kraftstoffleitung auch besonders zuverlässig.

Das Oberteil 1 weist einen ersten Flansch 19 mit einer Öffnung 21 auf, während das Unterteil 3 einen zweiten Flansch 23 mit einer Öffnung 25 aufweist. In dem in Figur 1 dargestellten geschlossenen Zustand des Halters fluchten die erste Öffnung 21 und die zweite Öffnung 25, so dass der Halter mit Hilfe einer Schraube (nicht dargestellt), die durch erste Öffnung 21 und durch zweite Öffnung 25 gesteckt wird, an einem ebenfalls nicht dargestellten Kraftfahrzeug befestigt werden kann.

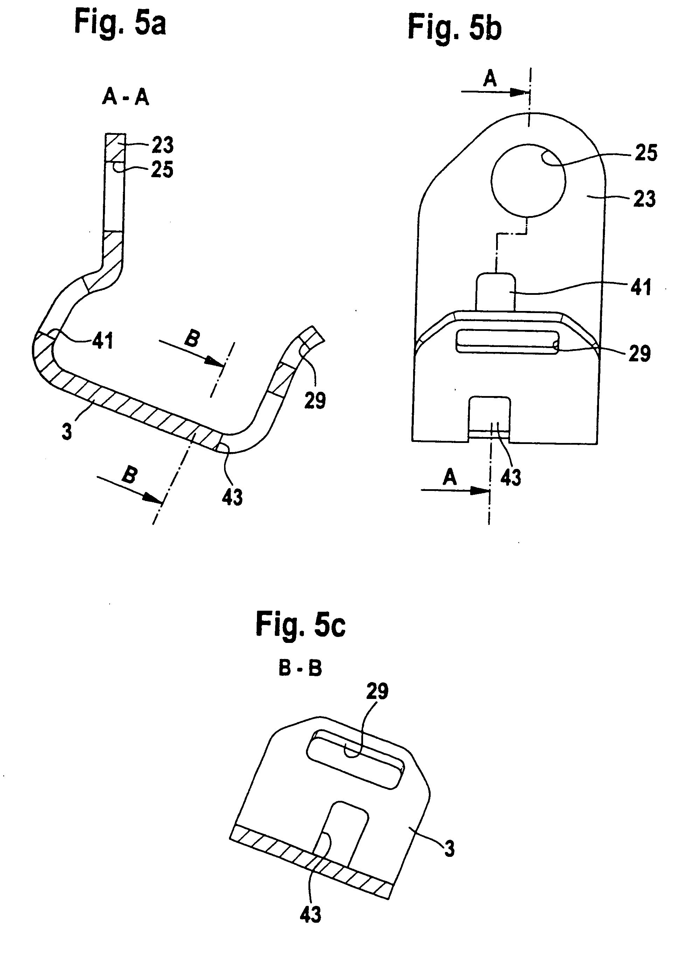

Das Oberteil 1 und das Unterteil 3 sind durch eine Biegeverlappung 27 gelenkig miteinander verbunden. Dazu weist das Unterteil 3 eine vierte Aussparung 29 auf, durch die ein Lappen 31 des Oberteils gesteckt ist. Die vierte Aussparung 29 ist in Figur 1 nicht sichtbar. In den Figuren 2 und 5 ist die vierte Aussparung 29 jedoch gut zu erkennen.

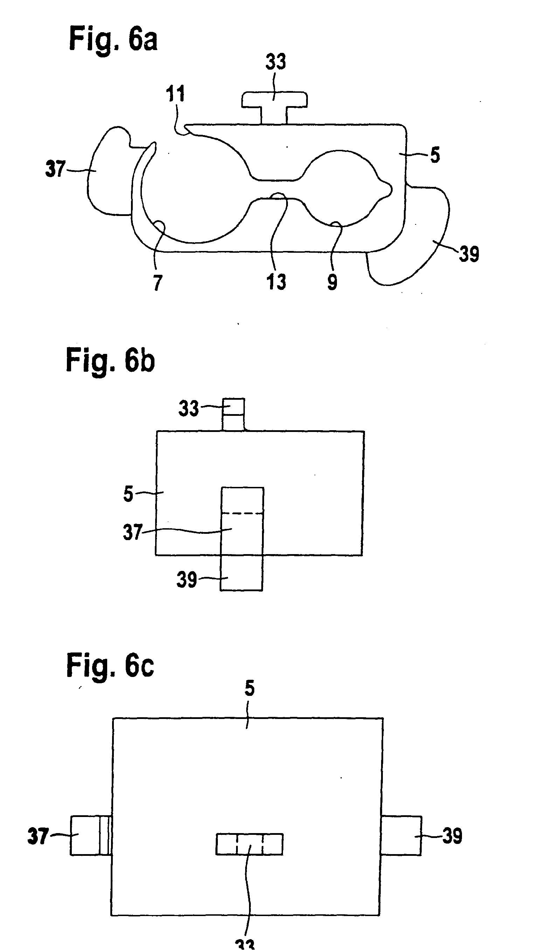

Das Aufnahmeteil 5 weist ein T-förmigens Befestigungselement 33 auf. Dieses Befestigungselement 33 ist besonders gut in den Figuren 6a, b und c erkennbar.

Im Oberteil 1 ist eine erste Aussparung 35 vorgesehen. Diese erste Aussparung 35 ist in den Figuren 2 und 4c besonders gut sichtbar.

An dem Aufnahmeteil 5 sind eine hakenförmige Nase 37 und ein Steg 39 angeformt (siehe auch Figuren 6a) - c)). Die hakenförmige Nase 37 greift in eine zweite Aussparung 41 des Unterteils 3 ein. Der Steg 39 erstreckt sich in geschlossenem Zustand des Halters durch eine dritte Aussparung 43 des Unterteils 3. Die zweite Aussparung 41 und die dritte Aussparung 43 sind besonders gut in den verschiedenen Ansichten der Figur 5 erkennbar.

Die Montage des erfindungsgemäßen Halters erfolgt in mehreren Schritten, die nachfolgend beschrieben werden:

Zunächst werden ein Oberteil 1 und das Aufnahmeteil 5 miteinander formschlüssig verbunden. Dies geschieht dadurch, dass das T-förmige Befestigungselement 33 des Aufnahmeteils 5 durch die erste Aussparung 35 des Oberteils geschoben und das Aufnahmeteil 5 anschließend um 90 ° in die in den Figuren 1, 2 und 3 dargestellte Position verdreht wird. Dadurch ergibt sich eine formschlüssige Verbindung zwischen Oberteil 1 und Aufnahmeteil 5.

Anschließend wird die gelenkige Verbindung zwischen dem Oberteil 1 und dem Unterteil 3 dadurch hergestellt, dass der Lappen 31 des Oberteils 1 durch die vierte Aussparung 29 des Unterteils 3 geschoben wird. Da das Aufnahmeteil 5 zu diesem Zeitpunkt bereits mit dem Oberteil 1 verbunden ist, kann das Unterteil 3 nicht in der Position, wie es in Figur 1 dargestellt ist, auf den Lappen 31 des Oberteils 1 aufgeschoben werden. Es ist vielmehr erforderlich, dass das Unterteil 3 gegenüber der in Figur 1 dargestellten Position um etwa 90 ° gegen den Uhrzeigersinn verdreht auf den Lappen 31 aufgeschoben wird. In dieser Position kann der zweite Flansch 32 am Aufnahmeteil 5 vorbeibewegt werden.

Wenn nun die Biegeverlappung 27 zwischen Oberteil 1 und Unterteil 3 hergestellt ist und das Unterteil 3 die zuvor beschriebene geöffnete Position einnimmt, kann das Aufnahmeteil 5 aufgeklappt werden und die hakenförmige Nase 37 in die zweite Aussparung 41 des Unterteils eingeführt werden, so dass auch Unterteil 3 und Aufnahmeteil 5 formschlüssig miteinander verbunden sind.

In dieser nicht dargestellten geöffneten Stellung des Halters befindet sich der Steg 39 des Aufnahmeteils noch innerhalb des Unterteils 3. Wenn nun der Halter geschlossen wird, das heißt dass der erste Flansch 19 des Oberteils 1 und der zweite Flansch 23 des Unterteils 3 in Anlage zueinander kommen, bewegt sich der Steg 39 des Aufnahmeteils 5 ohne weiteres Zutun durch die dritte Aussparung 43 des Unterteils 3 hindurch und sorgt somit für eine zusätzliche Fixierung des Aufnahmeteils 5 im Unterteil 3. Damit ist der erfindungsgemäße Halter vormontiert und die drei Bauteile des Halters, nämlich Oberteil 1, Unterteil 3 und Aufnahmeteil 5 sind unverlierbar miteinander verbunden.

Wenn nun dieser vormontierte Halter am Kraftfahrzeug (nicht dargestellt) verbaut werden soll, dann ist es lediglich erforderlich, den erfindungsgemäßen Halter zu öffnen. Geöffnet wird der Halter dadurch, dass das Unterteil 3 an der Biegeverlappung 27 relativ zum Oberteil 1 gegen den Uhrzeigersinn gedreht wird. Dadurch entfernen sich der erste Flansch 19 des Oberteils und der zweite Flansch 23 des Unterteils 3 voneinander. Außerdem wird das Aufnahmeteil 5 automatisch geöffnet, weil die Drehbewegung des Unterteils 3 auf die hakenförmige Nase 27 des Aufnahmeteils 5 übertragen wird. Infolgedessen öffnen sich die Öffnung 11 und der Durchbruch 13 des Aufnahmeteils 5, so dass der geöffnete Halter über die im Fahrzeug bereits vorhandenen Kraftstoffleitungen 15 und 17 geschoben werden kann.

Sobald die Kraftstoffleitungen 15 und 17 ihre Position im Aufnahmeteil 5 erreicht haben, wird der Halter wieder geschlossen, so dass der erste Flansch 19 und der zweite Flansch 23 in Anlage zueinander gelangen. Dadurch sind die erste Kraftstoffleitung 15 und die zweite Kraftstoffleitung 17 sicher gehalten und der Halter kann durch eine Schraube, welche durch die Öffnungen 21 und 25 gesteckt wird, auf einfachste Weise mit dem Fahrzeug fest verbunden werden.

Aus dem zuvor Gesagten ergibt sich, dass die Montage des erfindungsgemäßen Halters im Kraftfahrzeug sehr einfach ist, da der vormontierte Halter, bestehend aus Oberteil 1, Unterteil 3 und Aufnahmeteil 5, nicht mehr auseinander fallen kann, da alle Teile miteinander fest und formschlüssig verbunden sind.

Die Montage des Halters am Kraftfahrzeug wird weiter dadurch erleichtert, dass durch das Öffnen von Oberteil 1 und Unterteil 3 zwangsläufig auch das Aufnahmeteil 5 geöffnet wird, ohne dass es weiterer Handgriffe des Monteurs bedarf.

Im Ergebnis ist durch den erfindungsgemäßen Halter eine sehr einfache, zuverlässige, prozesssichere und fehlerfreie Befestigung der Kraftstoffleitungen 15 und 17 im Kraftfahrzeug möglich.

## Patentansprüche

1. Halter für mindestens eine Kraftstoffleitung mit einem Oberteil (1) und mit einem Unterteil (3), wobei das Oberteil (1) und das Unterteil (3) gelenkig miteinander verbunden sind, und mit einem aufklappbaren Aufnahmeteil (5) für eine oder mehrere Kraftstoffleitungen (15, 17), wobei das Aufnahmeteil (5) in geschlossenem Zustand des Halters vom Oberteil (1) und vom Unterteil (3) fixiert wird, **dadurch gekennzeichnet, dass** das Aufnahmeteil (5) formschlüssig mit dem Oberteil (1) verbindbar ist.

2. Halter nach Anspruch 1, **dadurch gekennzeichnet, dass** das Oberteil (1) eine erste Aussparung (35) aufweist, dass das Aufnahmeteil (5) ein T-förmiges Befestigungselement (33) aufweist, und dass Oberteil (1) und Aufnahmeteil (5) mittels erster Aussparung (35) und Befestigungselement (33) miteinander verbindbar sind.

3. Halter nach Anspruch 1 oder 2, **dadurch gekennzeichnet, dass** das Unterteil (3) eine zweite Aussparung (41) aufweist, dass das Aufnahmeteil (5) eine hakenförmige Nase (37) aufweist, und dass Unterteil (3) und Aufnahmeteil (5) mittels zweiter Aussparung (41) und Nase (37) miteinander verbindbar sind.

4. Halter nach einem der vorhergehenden Ansprüche, **dadurch gekennzeichnet, dass** das Unterteil (3) eine dritte Aussparung (43) aufweist, dass das Aufnahmeteil (5) einen mit der dritten Aussparung (43) zusammenwirkenden Steg (39) aufweist.

5. Halter nach einem der vorhergehenden Ansprüche, **dadurch gekennzeichnet, dass** das Unterteil (3) eine vierte Aussparung (29) aufweist, und dass das Oberteil (1) einen mit der vierten Aussparung (43) zusammenwirkenden Lappen (41) aufweist, so dass Oberteil (1) und Unterteil (3) durch eine Verlappung, insbesondere eine Biegeverlappung (27), miteinander verbunden sind.

6. Halter nach einem der vorhergehenden Ansprüche, **dadurch gekennzeichnet, dass** das Oberteil (1) einen ersten Flansch (19) mit einer ersten Öffnung (21) aufweist, dass das Unterteil (3) einen zweiten Flansch (23) mit einer zweiten Öffnung (25) aufweist, und dass in geschlossenem Zustand des Halters die erste Öffnung (21) des Oberteils (1) und die zweite Öffnung (25) des Unterteils (3) miteinander fluchten.

7. Halter nach einem der vorhergehenden Ansprüche, **dadurch gekennzeichnet, dass** das Aufnahmeteil (5) aus einem elastischen Material, insbesondere Gummi, hergestellt wird.

8. Halter nach einem der vorhergehenden Ansprüche, **dadurch gekennzeichnet, dass** das Oberteil (1) und/oder das Unterteil (3) aus Blech, insbesondere aus Stahlblech, hergestellt wird.
